**Europäisches Patentamt**

**European Patent Office**

**Office européen des brevets**

(19)

(11) Numéro de publication: **0 155 196**
**B1**

# (12) FASCICULE DE BREVET EUROPÉEN

(45) Date de publication du fascicule du brevet:
**14.12.88**

(51) Int. Cl.⁴: **C 03 B 37/16**

(21) Numéro de dépôt: **85400029.6**

(22) Date de dépôt: **08.01.85**

(54) **Dispositif de clivage d'au moins une fibre optique.**

(30) Priorité: **20.01.84 FR 8400891**

(43) Date de publication de la demande:
**18.09.85 Bulletin 85/38**

(45) Mention de la délivrance du brevet:
**14.12.88 Bulletin 88/50**

(84) Etats contractants désignés:
**DE GB IT SE**

(56) Documents cité:
**DE-A-3 126 852**
**US-A-4 159 793**

**Le dossier contient des informations techniques présentées postérieurement au dépôt de la demande et ne figurant pas dans le présent fascicule.**

(73) Titulaire: **SOCAPEX, 10 bis, quai Léon Blum, F-92153 Suresnes (FR)**

(72) Inventeur: **Soster, Marie- Claude, THOMSON- CSF SCPI 173, bld Haussmann, F-75379 Paris Cedex 08 (FR)**
Inventeur: **Anastasie, Roger, THOMSON- CSF SCPI 173, bld Haussmann, F-75379 Paris Cedex 08 (FR)**

(74) Mandataire: **Hasenrader, Hubert, Cabinet BEAU DE LOMENIE 55, rue d'Amsterdam, F-75008 Paris (FR)**

## Description

La présente invention a pour objet un dispositif de clivage d'au moins une fibre optique.

On connaît de la demande de brevet français 2 399 310 déposé le 31 juillet 1978 un procédé de clivage dans lequel une série de fibres optiques est fixée par une bride de serrage sur une partie de support de revêtement. Les extrémités des fibres nues qui débouchent des parties de revêtement sont maintenues dans des gorges par un organe élastique. Un organe de découpe constitué par un couteau réalise une armorce de clivage de fibres. Dans la région de découpe, les fibres sont placées sur un organe élastique par exemple en caoutchouc en dessous duquel est disposé un ressort à lame. Le clivage de la fibre est obtenu par courbure du ressort à lame et de l'organe élastique de façon à exercer une force sur les fibres nues qui provoquent leur rupture le long de points marqués en produisant les surfaces planes requises perpendiculairement aux axes des fibres.

Selon le dispositif de cette antériorité destiné à une application industrielle, illustré aux figures 8 à 13 de ce document, des brides de serrage fixes sont prévues de part et d'autre du ressort à lame et du couteau dans le but de bloquer les fibres pendant l'opération de courbure du ressort à lame.

La présente invention concerne un dispositif destiné au clivage d'au moins une fibre optique et comportant un outil pour réaliser une amorce de clivage et des moyens pour exercer des efforts sur ladite fibre optique pour effectuer son clivage, les moyens pour exercer des efforts sur ladite fibre optique comportant un support flexible sur lequel ladite fibre est disposée lorsque le dispositif est utilisé et des moyens pour réaliser une flexion de support flexible et pour réaliser un blocage de ladite fibre optique de part et d'autre de l'endroit où l'outil réalise une amorce de clivage, de telle sorte que la fibre soit bloquée sur ledit support flexible de manière à empêcher tout coulissement de celle-ci lors de la mise en flexion dudit support flexible, les moyens pour réaliser une flexion du support flexible et pour bloquer ladite fibre optique consistant en deux brides mobiles en rotation, disposées de manière à appuyer sur ladite fibre optique ainsi que sur le support flexible vers les bords de celui-ci, le support flexible étant maintenu en son milieu dans la zone d'amorce de clivage par une arête d'un porte-appui fibre, un chariot mobile étant prévu pour commander le déplacement des deux brides, lesquelles sont montées chacune dans un porte-bride qui est traversé par ledit support flexible et qui est mobile en rotation dans le chariot mobile, de telle sorte que, lors du déplacement du chariot mobile, les brides assurent à la fois le blocage de ladite fibre optique et la flexion du support flexible.

Ainsi, grâce à l'invention, les brides montées en rotation sur un chariot mobile permettent à la fois le blocage de la fibre sur le support flexible et la mise en flexion du support flexible dans des conditions avantageuses.

Selon un mode de réalisation préféré de l'invention, l'axe de rotation d'au moins un porte-bride est de préférence situé sensiblement dans le plan du support flexible.

Selon un autre mode de réalisation préféré, le chariot mobile est actionné par une came et comporte un doigt réglable coopérant avec ladite came.

L'outil pour réaliser une amorce de clivage peut être également commandé par ladite came. La commande de l'outil de clivage peut être alors assurée par une tige coopérant avec la came et actionnant un levier portant l'outil. La came présente avantageusement des profils ménagés sur deux secteurs opposés, l'un correspondant à l'actionnement de l'outil de clivage et l'autre à celui du chariot mobile. Le chariot peut présenter une ouverture recevant la came.

La came peut être profilée de manière telle qu'elle réalise la séquence suivante :
- bridage de la fibre et mise en pré-flexion du support flexible ;
- abaissement de l'outil pour réaliser une amorce de clivage sur la fibre optique ;
- relevage de l'outil ;
- mise en flexion du support flexible jusqu'à cassure de la fibre.

Le dispositif selon l'invention comporte des caractéristiques avantageuses et notamment le fait que l'inclinaison des porte-brides s'effectue en même temps que la courbure de la fibre.

L'invention sera mieux comprise à la lecture de la description ci-dessous donnée à titre d'exemple non limitatif, en liaison avec les figures qui représentent :
- Les figures 1a à 1c, un dispositif suivant l'invention respectivement en position de repos, en position où on réalise une amorce de clivage, et en position de flexion ;
- la figure 2, une vue détaillée du profil de la came et des différentes positions fonctionnelles qu'elle est susceptible d'occuper ;
- les figures 3a à 3d, un dispositif selon l'invention respectivement en coupe longitudinale en vue latérale, en vues latérale avec arrachement partiel et en vue de dessus ;
- les figures 4a à 4d, respectivement le montage d'un porte bride suivant l'invention, une coupe latérale d'un porte bride suivant l'invention et une vue latérale de chacun des portes brides suivant l'invention ;
- les figures 4e, 4f et 4g représentent respectivement en coupe latérale en vue latérale et en vue de détail une bride montée dans le porte brides suivant l'invention ;
- les figures 5a et 5b, respectivement en coupe latérale et en vue de face un corps principal selon l'invention ;
- les figures 6a et 6b respectivement en coupe latérale et en vue de face avec coupe partielle de la partie inférieure d'un chariot mobile selon l'invention ;

- les figures 7a et 7b, respectivement en vue latérale et en vue de dessus une came selon l'invention ;
- les figures 8a et 8e, un porte appui-fibre selon l'invention respectivement suivant une coupe latérale, une vue de face, une vue de dessus et deux vues de détail ;
- les figures 9a à 9c, respectivement en coupe transversale en vue latérale et en vue de dessus avec coupe partielle d'un porte diamant selon l'invention ;
- les figures 10a et 10b respectivement en vue latérale et en vue de dessus, un levier de commande de diamant selon l'invention ;
- les figures 11a et 11b, respectivement en vue latérale et en vue de face, un porte diamant selon l'invention ;
- les figures 12a et 12b, respectivement en vue latérale et en vue de dessus, un support flexible selon l'invention ;
- la figure 12c, en rue de dessus un clinquant supportant le support flexible.

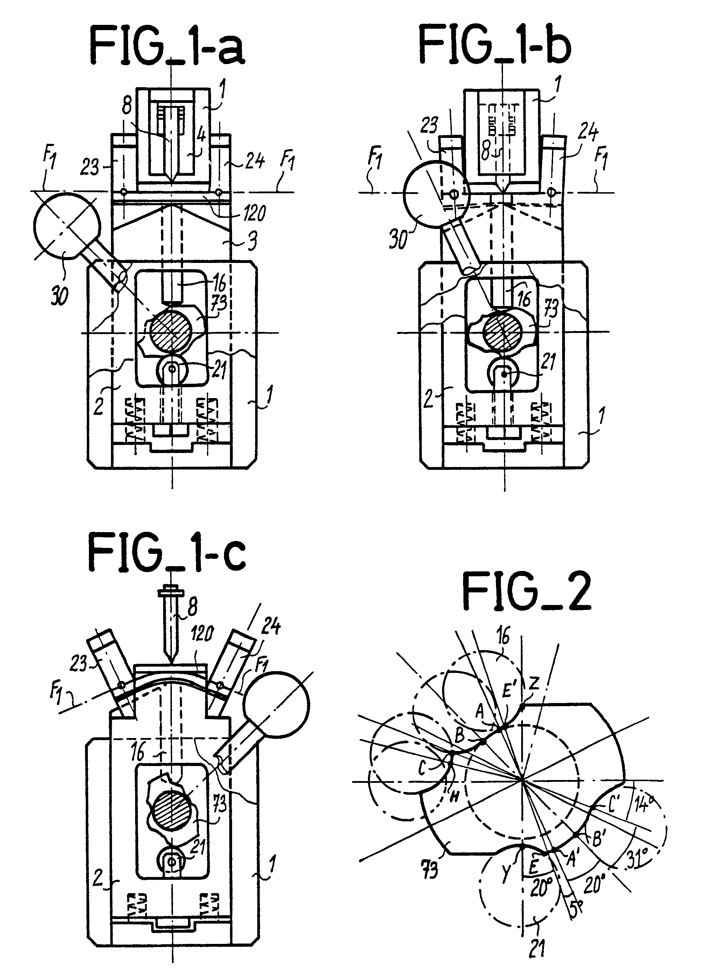

Les figures 1a à 1c schématisent les étapes principales du fonctionnement du dispositif suivant l'invention. Une (ou plusieurs) fibres optiques $F_1$ sont disposées sur un support flexible 120. Un corps principal 1 reçoit un porte-outil de coupe 8 dstiné à réaliser une amorce de clivage dans la fibre $F_1$. De part et d'autre de l'outil de coupe 8, sont disposés deux porte-brides 23 et 24 solidaires d'un chariot mobile 2. Ceux-ci portent chacun une bride dont la fonction est d'appuyer sur le support flexible 120 tout en maintenant la fibre optique sur celui-ci sans possibilité pour celle-ci de coulisser. De par ce principe, on évite d'avoir à brider séparément la fibre sur le support flexible.

Une came 73 entraîne d'une part une tige 16 qui commande les déplacements du porte-outil de coupe 8 et d'autre part, à sa partie inférieure un galet 21 solidaire du chariot mobile 2. Par conséquent, la rotation de la came 73, commandée manuellement par un levier de commande 30, coordonne l'action conjuguée des porte-brides 23 et 24 entraînés par le chariot mobile 2 et de l'outil de coupe 8 entrainé par la tige 16.

A la figure 1a, le dispositif est en position de repos c'est-à-dire que les brides des porte-brides 23 et 24 ne sont pas en contact avec le support flexible 120 et que l'outil de coupe 8 est en position relevée.

A la figure 1b, l'outil de coupe 8 est en contact avec la fibre de manière à réaliser l'amorce de clivage, et les brides des porte-brides 23 et 24 exercent une légère pression sur le support flexible 120 qui se cambre légèrement, ainsi que sur la fibre $F_1$ qui est ainsi maintenue en position lors de la réalisation de l'amorce de clivage.

A la figure 1c, l'outil de coupe 8 est relevé, et les brides portées par les porte-brides 23 et 24 réalisent, grâce à la descente du chariot mobile 2 une cambrure du support flexible 120 suffisante pour cliver la fibre $F_1$.

L'action de la came 73 est explicitée plus en détail à la figure 2, qui représente la cinématique du dispositif vu dans un repère où la came 73 est fixe et dans lequel par conséquent, le déplacement du doigt 16 et du galet 21 est visualisée en rotation autour de la came.

Tout d'abord, la came est en position 0, c'est-à-dire le galet 21 est tangent au point Y et le poussoir 16 du diamant au point Z. Dans cette position, les porte-brides 23 et 24 sont relevés ainsi que le porte-outil de coupe 8. On met alors en place la fibre $F_1$ dans une rainure en V ménagée dans le support flexible 120.

On tourne le levier 30 dans le sens horaire d'un angle d'environ 20°, ce qui, à la figure 2 est représenté par une rotation de 20° dans le sens anti-horaire. Ceci amène le galet 21 sur E et le poussoir 16 sur E'. Dans cette position, le diamant est descendu mais ne touche pas encore la fibre. Le chariot mobile 2 est descendu d'une quantité suffisante pour que les brides portées par les porte-brides 23 et 24 maintiennent la fibre $F_1$ dans le V du support flexible 120. Cette position correspond ainsi à un bridage de la fibre sans rainurage de celle-ci.

Une rotation supplémentaire du levier de 5° vient faire porter le galet 21 sur A' et le poussoir 16 sur A. Dans cette position, le diamant du porte-outil de coupe 8 est en contact avec la fibre $F_1$ avec une faible force d'appui, tandis que le chariot mobile 2 est resté dans sa position antérieure.

Une rotation ultérieure de 20° du levier amène le galet 21 sur B' et la tige 16 sur B. Dans cette position, le diamant est toujours en contact avec la fibre en vue de son rayurage et le chariot mobile reste toujours dans sa position antérieure.

Une rotation supplémentaire de 31° du levier et donc de la came vient mettre le galet 21 sur C' et la tige 16 sur C. Dans cette position, le diamant de l'outil de coupe 8 est remonté par rapport à la fibre et le chariot mobile 2 est toujours dans la même position que précédemment.

Enfin, une rotation de 14° du levier et de la came a pour effet de faire descendre le galet 21 et le chariot mobile 2 et par conséquent de cambrer le support flexible par appui des deux brides sur les bords de celui-ci, le support étant maintenu en son centre par une arête d'un porte-appui fibres comme il sera vu ci-après. Le cambrage du support entraîne le clivage des fibres comme il a déjà été décrit en introduction."

Au retour, une rotation de 14° du levier et de la came a pour effet de faire remonter le chariot mobile 2 et par conséquent, de libérer la fibre $F_1$ clivée, du serrage réalisé par les brides portées par les porte-brides 23 et 24.

On peut alors dégager la fibre clivée de l'appareil et le réarmer pour un nouveau clivage en effectuant la rotation inverse du levier pour une course totale, dans l'exemple ci-dessus de 90° dans le sens anti-horaire.

Selon une variante, dans une position intermédiaire repérée en H à la figure 2, un ergot 76 porté par la came 73 va entraîner le blocage de la tige 16 en position où l'outil de coupe est relevé. Ceci a pour effet que, lors du retour inverse du levier 30 vers sa position de repos en vue d'un nouveau clivage, le porte-outil de coupe 8 n'est pas descendu une nouvelle fois inutilement.

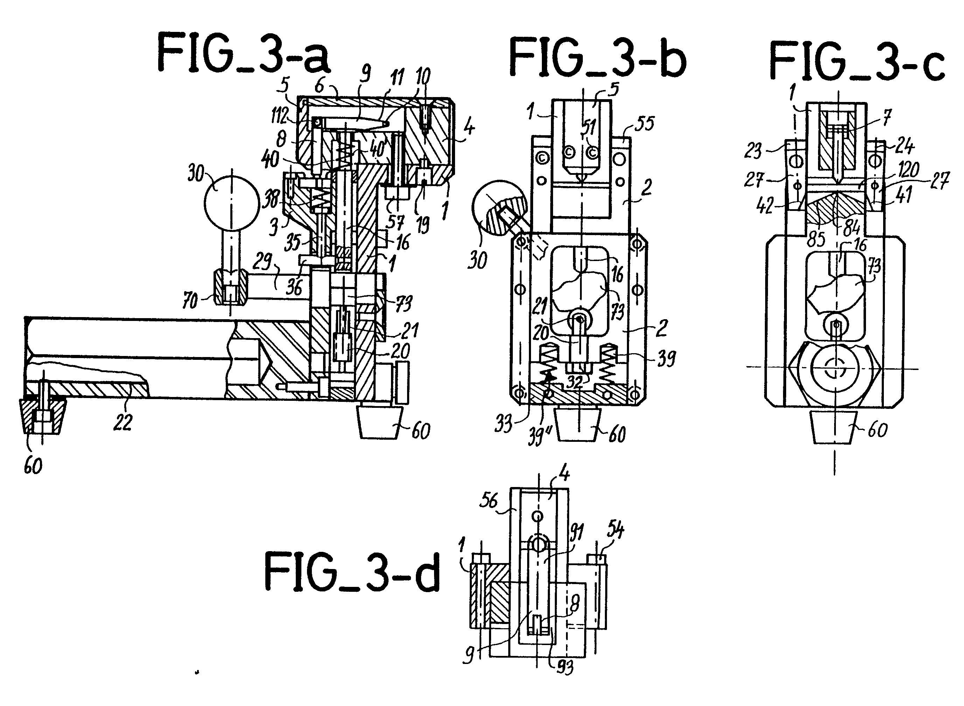

Selon la figure 3a, le dispositif comporte un corps principal 1 sur lequel est monté un porte-appui fibre 3 sur lequel est fixée un manche 22. Un axe 29 sur lequel est monté le levier 30 porte la came 73 et traverse le porte-appui fibre 3 et le corps principal 1. La tige 16 est rappelée vers le bas par un ressort 40 disposé dans un logement 40'. La partie supérieure de la tige 16 est en contact avec un levier de commande 9 articulé à une extrémité sur un axe 10 avec rappel par un ressort épingle 11 et articulé à son autre extrémité sur un axe 112 porté par le porte diamant 8. Par conséquent, le mouvement vers le bas de la tige 16 entraîne la mise en contact du diamant avec la fibre, permettant ainsi son rayurage.

D'autre part, le chariot mobile 2 est rappelé vers le haut par des ressorts 39. Le mouvement vers le bas du chariot mobile 2 entraîne le bridage de la fibre optique F par les brides 27 portées par les porte-brides 23 et 24 (Voir plus particulièrement les figures 3b et 3c).

A la figure 3e, plus particulièrement, on voit que, lors de la flexion du support mobile 120, celui-ci est maintenu en son milieu, dans la zone où a été réalisée le rayurage, amorce du clivage, par une arête 84 du porte appui fibre 3.

A la figure 3d, on voit que le levier 9 est disposé dans un logement 91 d'un support 4, qui porte également le logement 40' ainsi qu'une saignée 93 qui laisse le passage au porte diamant 8.

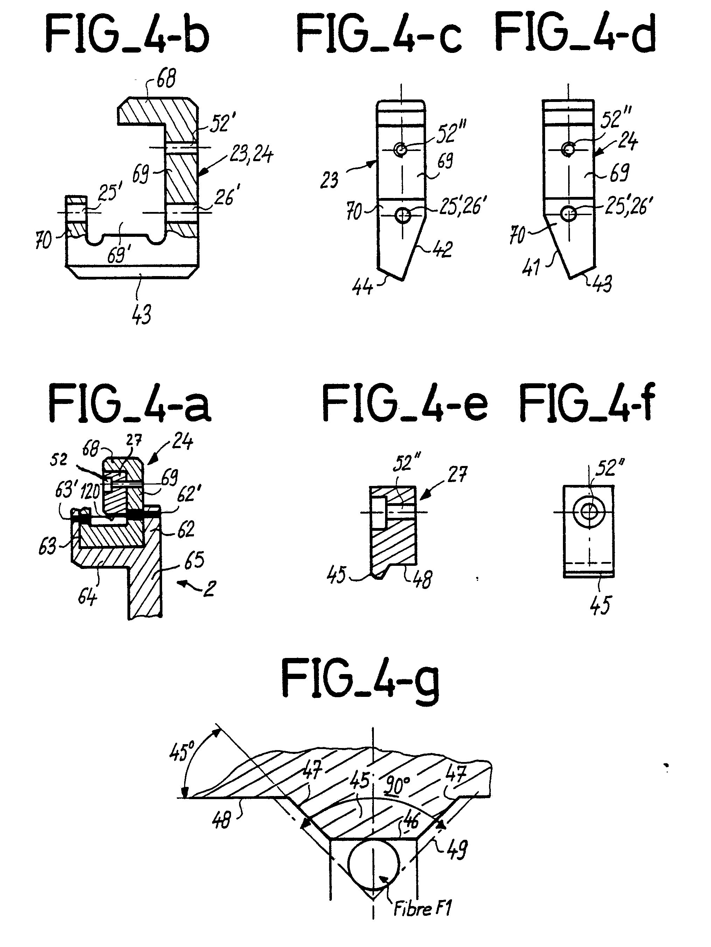

Selon les figures 4a à 4g, le chariot mobile 2 porte à sa partie supérieure, un rebord vertical 62 qui le prolonge vers le haut ainsi qu'un rebord horizontal 64 se prolongeant par un rebord vertical 63. Les rebords 62 à 64 définissent ainsi une cavité 61 destinée à recevoir chacune un des porte brides 23 et 24. Ceux-ci présentent des ouvertures 25' et 26' qui coopèrent avec des ouvertures 62' du rebord 62 et 63' du rapport 63 en recevant des demi-axes permettant la rotation des porte-brides. L'axe de rotation de ceux-ci est avantageusement situé au niveau de la partie supérieure du support mobile 120 de manière à correspondre à l'axe de la fibre $F_1$. Ceci permet un suivi optimal des mouvements des supports mobiles par l'ensemble brides, porte-brides. D'autre part, le bord inférieur 61' de chaque cavité 61 reçoit le bord inférieur du support flexible 120.

Chacun des porte-brides comporte une partie inférieure comportant deux pans coupés respectivement 42 et 44 pour le porte- brides 23 et 41 et 43 pour le porte-brides 24. Comme l'illustrent les figures 1c et 3c, les pans coupés 41 et 42 ont pour fonction de limiter le déplacement en rotation des porte-brides 23 et 24.

Les porte-brides 23 et 24 présentent une paroi verticale 70 dans laquelle est percé l'alésage 25' et une paroi verticale 69 dans laquelle est percé l'alésage 26' et qui se prolonge d'une partie supérieure percée d'un trou taraudé 52' destiné à la fixation de la bride correspondante 27. La position en hauteur de la bride 27 est déterminée avec précision grâce à un rebord supérieur horizontal 68.

Plus particulièrement aux figures 4e, 4f et 4g, chaque bride 27 comporte un alésage 52'' destiné à recevoir une vis 52 destinée à sa fixation sur le porte-bride correspondant. Elles présentent à leur partie inférieure un profil 45 destiné à l'application de la fibre $F_1$ dans le V du support flexible 120. Le profil 45 est détaillé à la figure 4g dans laquelle le V 49 recevant une fibre optique $F_1$ est représenté en pointillé. Le profil 45 présente un plat 46 limité de part et d'autre par deux pans coupés 47 formant avec l'horizontale un angle de 45°. Lorsque la bride 27 vient en butée par sa face inférieure 48 sur le support mobile 120, le profil 45 pénètre dans le V 49 d'une distance suffisante pour comprimer légèrement la fibre $F_1$ de manière à la maintenir en position, sans toutefois que la déformation qu'elle subit soit suffisamment importante pour la détériorer. On notera que dans la zone ou elle est bridée par les brides 27, la fibre $F_1$ peut conserver sa gaine de protection mécanique alors que celle-ci doit être enlevée dans la région où le diamant realise l'amorce de clivage. En tout état de cause, la bride 27 appuie simultanément sur le support flexible 120 et sur la fibre $F_1$, de telle sorte que des forces de flexion relativement importantes puissent être communiquées au support flexible sans toutefois que la fibre $F_1$ en subisse les contre-coups.

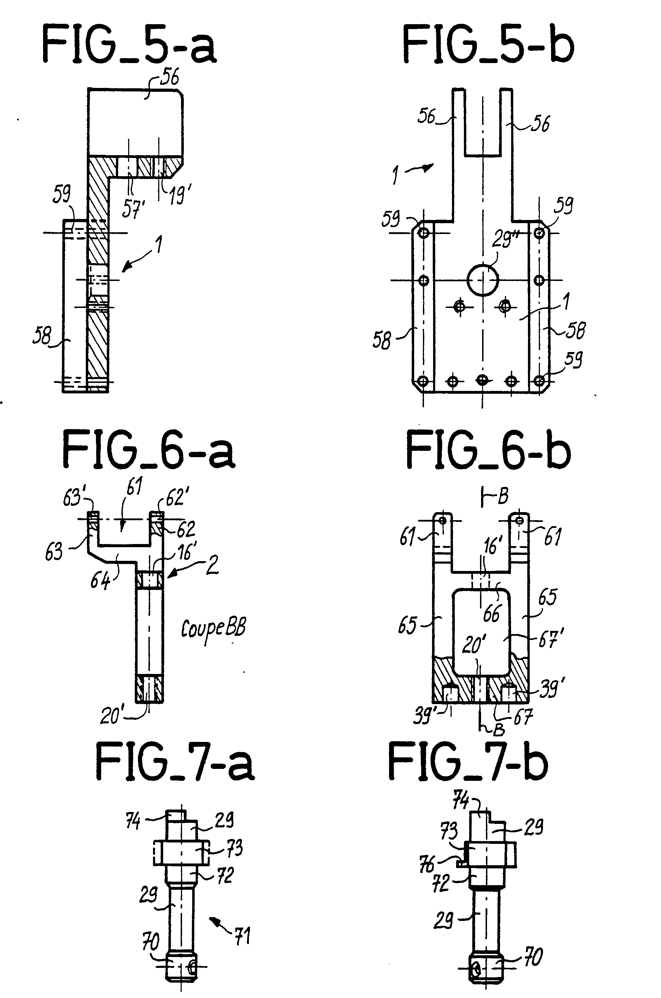

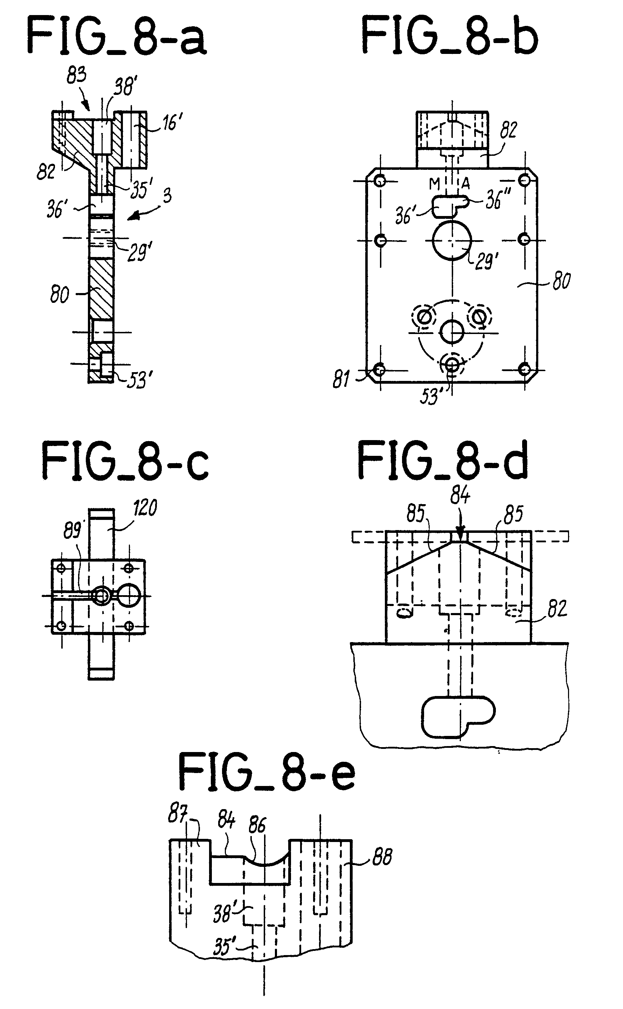

Selon les figures 5a et 5b, le corps principal 1 présente une partie centrale 1 portant une ouverture 29'' servant au passage de l'axe 29 de la came 73 ainsi que deux ailes 58 qui délimitent un espace dans lequel peut coulisser le chariot mobile 2. A sa partie supérieure, le corps principal 1 présente deux ailes 56 bordant la pièce 4. Les ailes 56 s'étendent vers l'arrière et sont bordées à leur partie inférieure par un rebord portant un alésage 57' laissant le passage à une vis 57 de fixation du support 4 ainsi qu'un taraudage 19' permettant le montage d'une vis de réglage 19. Le porte appui fibres 3 représenté aux figures 8a à 8d vient se fixer par des vis qui traversent des alésages 81 et des taraudages 59 du corps principal 1. Le porte appui fibres 3 présente un alésage 29' laissant passage à l'axe 29 de la came 73.

Le chariot mobile 2 représenté aux figures 6a et 6b présente un rebord inférieur 67 qui présente deux trous borgnes 39' recevant les extrémités des ressorts 39 ainsi qu'un alésage 20' recevant l'axe 20 portant le galet 21 dont la position est réglable par rotation de la tête 32 de la vis 20. Le rebord 67 se prolonge par deux rebords verticaux 65 définissant une cavité 67' formant un logement pour la came 73. Un rebord supérieur 66 formant pont à la partie supérieure des rebords verticaux 65 porte un alésage 16' laissant le passage à la tige 16. Les rebords verticaux 65 se prolongent à leur partie supérieure, par les rebords 62 à 64 forment un logement 61 dans lequel sont disposés les porte-brides 23 et 24 ainsi qu'il a été dit plus haut.

Selon les figures 7a et 7b, la pièce 71 faisant fonction de came présente un axe 29 recevant à une extrémité 70 le levier 30 et à l'extrémité opposée un doigt 74 formant butée lors de la rotation de la came pour empêcher celle-ci d'être soumise à une rotation supérieure à 90°. Dans la région de came proprement dite 73, est disposé un ergot 76 dont la fonction sera explicité plus loin.

Selon les figures 8a à 8e, le porte appui fibres 3 présente à sa partie supérieure 82 d'une part un alésage 35' laissant passage à une tige 35 rappelée par un ressort 38 coopérant avec un ergot 36 porté par la tige 16 et un alésage 16' laissant passage à la tige 16.

A l'extrémité inférieure de l'alésage 35' est ménagée une ouverture 36', 36'' dont la partie 36' est sensiblement rectangulaire et qui se prolonge à sa partie supérieure latéralement par la portion d'ouverture 36'' plus étroite et fermée vers le bas. Lors de la rotation de la came 73, l'ergot 76 vient (point H sur la figure 2) accrocher le doigt 36 porté par la tige 16 et déplacer vers la droite celui-ci qui traverse à ce moment l'ouverture 36' jusqu'à ce qu'il soit relevé en position non active où il traverse la portion d'ouverture 36''.

A ce moment, l'outil de coupe est en position relevée et ne peut plus être mis en contact avec la fibre à moins de réarmer manuellement le dispositif en agissant sur le pion 36 de manière à le repositionner dans l'ouverture 36'. Quand l'ergot est en position non active, lors du retour vers l'arrière du levier 30, la tige 16 n'est pas actionnée par la came et on évite ainsi d'abaisser inutilement le diamant.

A sa partie supérieure, le porte appui fibre présente une portion plane 84 destinée à recevoir le support flexible 120 dans sa partie centrale et qui est bordée de chaque côté par deux pans coupés 85 permettant le débattement du support flexible 120 lors de son pliage.

Plus particulièrement à la figure 8c, le porte appui fibres 3 est fermé à sa patie supérieure par un capot 89 qui maintient en place le support flexible 120 et qui laisse le passage libre au diamant.

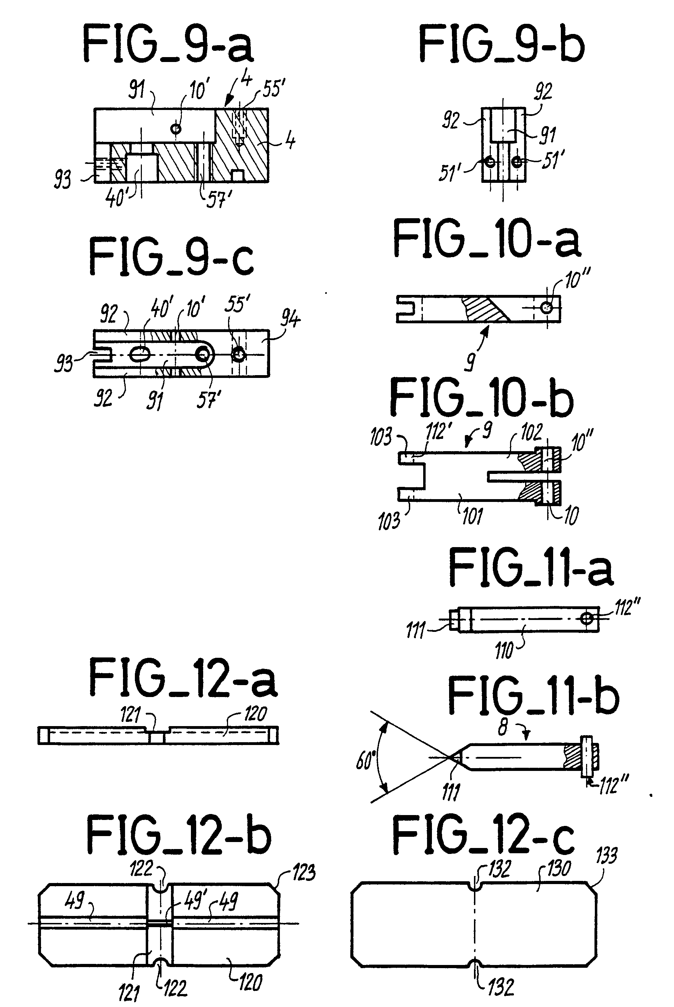

Selon les figures 9a à 9c, le support 4 de forme générale parallépipédique, présente à sa partie supérieure une saignée 91 destinée à recevoir un levier 9 articulé à une extrémité grâce à un axe 10 pénétrant à la fois dans des alésages 10' du support 4 et 10'' du levier 9. A la partie inférieure de la saignée 91 débouche l'alésage 40' à travers lequel passe la tige 16 rappelée vers le bas par le ressort 40. A l'extrémité débouchante de la saignée horizontale 91 est disposée une saignée verticale 93 laissant libre passage au porte diamant 8 articulé autour d'un axe 112. A cet effet, le levier 9 (figure 10a et 10b) porte à une de ces extrémités deux prolongements 103 présentant chacun une fourche 112' traversée par un axe qui traverse également un alésage 112'' du porte diamant 8. Le porte diamant 8 (figure 11a et 11b) se compose d'une partie carrée 110 prolongée par un diamant 111 scellé.

Le support flexible 120 comporte une rainure en V 49 dont la partie centrale est rétrécie en 49' de manière à former un Vé moins haut mais coaxial avec le Vé 49, étant donné que la fibre est dénudée dans la partie ou est réalisée l'amorce de clivage.

Pour raidir le support flexible qui est réalisé en matériau plastique, on dispose avantageusement, en dessous de celui-ci un ou plusieurs clinquants 130 représentées à la figure 12c.

**Revendications**

1. Dispositif destiné au clivage d'au moins une fibre optique ($F_1$) et comportant un outil (8) pour réaliser une amorce de clivage et des moyens pour exercer des efforts sur ladite fibre optique pour effectuer son clivage, les moyens pour exercer des efforts sur ladite fibre optique comportant un support flexible (120) sur lequel ladite fibre est disposée lorsque le dispositif est utilisé et des moyens pour réaliser une flexion de support flexible et pour réaliser un blocage de ladite fibre optique de part et d'autre de l'endroit où l'outil réalise une amorce de clivage, de telle sorte que la fibre soit bloquée sur ledit support flexible de manière à empêcher tout coulissement de celle-ci lors de la mise en flexion dudit support flexible, les moyens pour réaliser une flexion du support flexible et pour bloquer ladite fibre optique consistant en deux brides (27) mobiles en rotation, disposées de manière à appuyer sur ladite fibre optique ($F_1$) ainsi que sur le support flexible (120) vers les bords de celui-ci, le support flexible étant maintenu en son milieu dans la zone d'amorce de clivage par une arête (84) d'un porte appui fibre (3), un chariot mobile (2) étant prévu pour commander le déplacement des deux brides (27), lesquelles sont montées chacune dans un porte-bride (23, 24) qui est traversé par ledit support flexible (120) et qui est mobile en rotation dans le chariot mobile (2), de telle sorte que, lors du déplacement du chariot mobile (2), les brides (27) assurent à la fois le blocage de ladite fibre optique et la flexion du support flexible (120).

2. Dispositif selon la revendication 1, caractérisé en ce que l'axe de rotation (26, 26') d'au moins un porte-bride (23, 24) est situé sensiblement dans le plan du support.

3. Dispositif selon une des revendications 1 ou 2, caractérisé en ce que le chariot mobile (2) est actionné par une came (73) et comporte un doigt réglable (21) coopérant avec ladite came.

4. Dispositif selon une des revendications 2 ou 3, caractérisé en ce que l'outil (8) pour réaliser une amorce de clivage est également commandé par ladite came (73).

5. Dispositif selon la revendication 4, caractérisé en ce que la commande de l'outil de clivage (8) est assurée par une tige (16) coopérant la came (73) et actionnant un levier (9) portant l'outil.

6. Dispositif selon la revendication 5, caractérisé en ce que la came (73) présente des profils ménagés sur deux secteurs opposés, l'un correspondant à l'actionnement de la tige (16) et l'autre à celui du chariot mobile (2).

7. Dispositif selon la revendication 6, caractérisé en ce que le chariot (2) présente une ouverture (67') recevant la came (73).

8. Dispositif selon une des revendications 3 à 7, caractérisé en ce que la came (73) est profilée de manière telle qu'elle réalise la séquence suivante:
- brider la fibre et mettre en pré-flexion le support flexible (120),
- abaisser l'outil (8) pour réaliser une amorce de clivage sur la fibre optique ($F_1$),
- relever l'outil (8),
- mettre en flexion le support flexible (120) jusqu'au clivage de la fibre ($F_1$).


**Patentansprüche**

1. Vorrichtung zum Trennen von mindestens einer optischen Faser ($F_1$) mit einem Werkzeug (8) zur Durchführung eines Trennbeginns und mit Mitteln zur Ausübung von Kräften auf die optische Faser, um deren Trennung zu bewirken, wobei die Mittel zur Ausübung von Kräften auf die optische Faser folgendes aufweisen:
Einen flexiblen Träger (120), auf dem die optische Faser während der Verwendung der Vorrichtung angeordnet ist und Mittel zum Bewirken einer Biegung des flexiblen Trägers und zur Durchführung einer Blockierung der optischen Faser auf beiden Seiten der Stelle, wo das Werkzeug einen Trennbeginn vorsieht, derart, daß die Faser auf dem flexiblen Träger in der Weise blockiert ist, daß jedes Gleiten der Faser während der Biegung des flexiblen Trägers verhindert wird, wobei die Mittel zur Durchführung einer Biegung des flexiblen Trägers und zur Blockierung der optischen Faser aus zwei drehbaren Bügeln bestehen, die derart angeordnet sind, daß sie gegen die optische Faser ($F_1$) und gegen den flexiblen Träger (120) über die Ränder drücken, wobei der flexible Träger mittels einer Kante eines Faserstützhalters in seiner Lage in der Zone des Trennbeginns gehalten wird, und wobei ein beweglicher Schlitten (2) vorgesehen ist, um die Versetzung der zwei Bügel (27) zu steuern, welche jeweils in einem Bügelhalter (23, 24) angeordnet sind, der durch den flexiblen Träger (120) überbrückt ist und der in dem beweglichen Schlitten derart drehbar gelagert ist, daß während der Versetzung des beweglichen Schlittens (2) die Bügel zugleich die Blockierung der optischen Faser und die Biegung des flexiblen Trägers (120) sicherstellen

2. Vorrichtung nach Anspruch 1, dadurch gekennzeichnet, daß die Drehachse (26, 26') mindestens eines Bügelhalters (23, 24) deutlich in der Tragebene angeordnet ist.

3. Vorrichtung nach einem der Ansprüche 1 oder 2, dadurch gekennzeichnet, daß der bewegliche Schlitten (2) durch einen Nocken (73) betätigt wird und einen regelbaren Finger (21) aufweist, der mit dem Nocken zusammenarbeitet.

4. Vorrichtung nach einem der Ansprüche 2 oder 3, dadurch gekennzeichnet, daß das Werkzeug (8) zur Realisierung eines Trennbeginns oder Trennvorgangs gleichfalls durch den Nocken (73) gesteuert wird.

5. Vorrichtung nach Anspruch 4, dadurch gekennzeichnet, daß der Befehl des Trennwerkzeugs (8) durch einen Stift (16) sichergestellt wird, der mit dem Nocken (73) zusammenarbeitet und einen das Werkzeug tragenden Hebel (9) betätigt.

6. Vorrichtung nach Anspruch 5, dadurch gekennzeichnet, daß der Nocken (73) auf zwei entgegengesetzten Sektoren Aussparungsprofile aufweist, von denen eines der Betätigung durch den Stift (16) und das andere der Betätigung durch den beweglichen Schlitten (2) entspricht.

7. Vorrichtung nach Anspruch 6, dadurch gekennzeichnet, daß der Schlitten (2) eine den Nocken (73) aufnehmende Öffnung (67') bildet.

8. Vorrichtung nach einem der Ansprüche 3 bis 7, dadurch gekennzeichnet, daß der Nocken (73) derart profiliert ist, daß die folgende Folge realisiert wird:
Festlegen der Faser und Vorbiegen des flexiblen Trägers (120), Absenken des Werkzeugs (8) zur Realisierung eines Trennvorgangs an der optischen Faser ($F_1$), Wiederanheben des Werkzeugs (8), Durchbiegen des flexiblen Trägers (120) bis zur Trennung der Faser ($F_1$).


**Claims**

1. Device for splitting at least one optical fibre ($F_1$) and comprising a tool (8) for initiating the splitting and means for exerting forces on said optical fibre in order to achieve its splitting, the means for exerting forces on said optical fibre comprising a flexible support (120) on which said fibre is placed when the device is used and means for causing a bending of the flexible support and for locking said optical fibre on either side of the spot where the tool initiates the splitting, in such a way that the fibre is locked on said flexible support in such a way as to prevent any sliding of the latter when said flexible support is caused to bend, the means for causing the flexible support to bend and for locking said optical fibre consisting in two clamps (27) movable in rotation, arranged in such a way as to rest on said optical fibre ($F_1$) as well as on the flexible support (120) towards the edges thereof, said flexible support being held in its middle part in the splitting initiating zone by an edge (84) of a fibre rest holder (3) a movable slide (2) being provided for controlling the movement of the two clamps (27), which latter are each mounted in a clamp-holder (23, 24) which is traversed by said flexible support (120) and which is movable in rotation in the movable slide (2), in such a way that during the displacement of the movable slide (2), the clamps (27) achieve both the locking in position of said optical fibre and the bending of the flexible support (120).

2. Device according to claim 1, characterized in that the rotation axis (26, 26') of at least one clamp holder (23, 24) is situated substantially in the plane of the support.

3. Device according to any one of claims 1 or 2, characterized in that the movable slide (2) is actuated by a cam (73) and comprises an adjustable finger (21) cooperating with said cam.

4. Device according to one of claims 2 or 3, characterized in that the tool (8) for initiating the splitting is also controlled by said cam (73).

5. Device according to claim 4, characterized in that the splitting tool is controlled by a rod (16) cooperating with the cam (73) and actuating a lever (9) carrying the tool.

6. Device according to claim 5, characterized in that the cam (73) has profiles provided on two opposite sectors, one corresponding to the activation of the rod (16) and the other to the actuation of the movable slide (2).

7. Device according to claim 6, characterized in that the slide (2) is provided with an aperture (67') receiving cam (73).

8. Device according to one of claims 3 to 7, characterized in that the cam (73) has a cam profile adapted to cause the following sequence of operations :
- clamping the fibre and pre-bending the flexible support (120),
- lowering the tool, for initiating the splitting of said optical fiber ($F_1$),
- raising said tool (8),
- bending the flexible support (120) until splitting of the fiber ($F_1$).

0 155 196

FIG_1-a

FIG_1-b

FIG_1-c

FIG_2

1

# FIG_3-a

# FIG_3-b

# FIG_3-c

# FIG_3-d

0 155 196

# FIG_4-b   FIG_4-c   FIG_4-d

# FIG_4-a   FIG_4-e   FIG_4-f

# FIG_4-g

Fibre F1

# FIG_5-a

# FIG_5-b

# FIG_6-a

Coupe BB

# FIG_6-b

# FIG_7-a

# FIG_7-b

# FIG_8-a

# FIG_8-b

# FIG_8-c

# FIG_8-d

# FIG_8-e

9

# FIG_9-a

# FIG_9-b

# FIG_9-c

# FIG_10-a

# FIG_10-b

# FIG_11-a

# FIG_12-a

# FIG_11-b

# FIG_12-b

# FIG_12-c

11